(19) Europäisches Patentamt
European Patent Office
Office européen des brevets

(11) Veröffentlichungsnummer: **0 644 237 A1**

# (12) EUROPÄISCHE PATENTANMELDUNG

(21) Anmeldenummer: **94113882.8**

(51) Int. Cl.[6]: **C08L 23/10**, C08L 29/14

(22) Anmeldetag: **05.09.94**

(30) Priorität: **22.09.93 DE 4332114**

(43) Veröffentlichungstag der Anmeldung:
**22.03.95 Patentblatt 95/12**

(84) Benannte Vertragsstaaten:
**BE DE ES FR GB IT NL SE**

(71) Anmelder: **HOECHST AKTIENGESELLSCHAFT**
**Brüningstrasse 50**
**D-65929 Frankfurt am Main (DE)**

(72) Erfinder: **Gutweiler, Matthias, Dr.**
**Hintergasse 2**
**D-65232 Taunusstein (DE)**
Erfinder: **Zimmermann, Hans-Jürgen, Dr.**
**Goethestrasse 5**
**D-64331 Weiterstadt (DE)**

## (54) Polypropylen-Formmasse mit durch Polyvinylbutysal verbesserten Oberflächeneigenschaften.

(57) Formteile, die aus einer Polypropylen-Formmasse durch thermoplastische Umformung hergestellt wurden, welche Polypropylen oder Ethylen-Propylen-Copolymere und Polyvinylbutyral der Formel

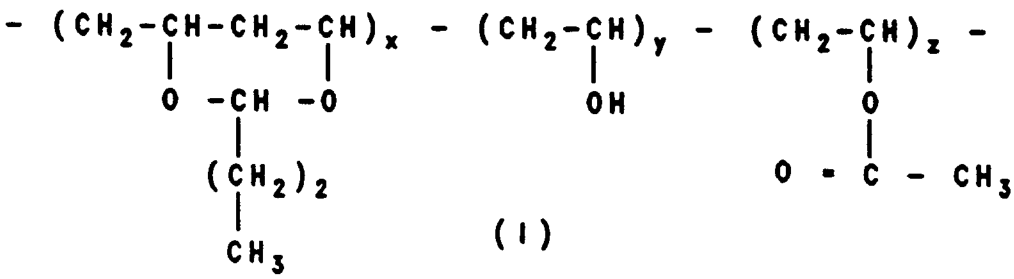

(I)

enthält, besitzen gegenüber Formteilen aus einer Polypropylen-Formmasse ohne PVB erhebliche Vorteile, da sie eine höhere Oberflächenspannung aufweisen und sich daher ohne weitere Vorbehandlung der Oberfläche einwandfrei lackieren, bedrucken, beschriften und kaschieren lassen.

EP 0 644 237 A1

Die Erfindung bezieht sich auf eine Polypropylen-Formmasse hoher Härte mit verbesserter Lackierbarkeit, Bedruckbarkeit, Beschriftbarkeit, Kaschierbarkeit und/oder hoher Schlagzähigkeit auch bei tiefer Temperatur, bestehend aus einem isotaktischen Polymer des Propylens oder dessen Mischungen mit einem geeigneten Ethylen-Propylen-Kautschuk, der gegebenenfalls Polyethylen enthält, und Polyvinylbutyral.

Schlagzähe Polypropylen-Formmassen sind im Prinzip bekannt. Sie werden hergestellt durch Schmelzmischen von Polypropylen und einem Kautschuk, wie beispielsweise Ethylen-Propylen-Kautschuk (EPM) oder Ethylen-Propylen-Dien-Kautschuk (EPDM).

Entsprechend dem Stand der Technik besteht das verwendete Polypropylen zu mindestens 2 - 10 Gew.-% aus ataktischem Polypropylenketten (APP) und zu 90 - 98 % aus isotaktischen Polypropylenketten (IPP) stark unterschiedlicher Kettenlänge ($M_w/M_n$ = 5 bis 10).

Alternativ wird als Polypropylenkomponente auch ein Polypropylencopolymer verwendet, das neben APP, Polypropylenketten und Polymerketten des Comonomers mit oben beschriebenem Aufbau noch Propylen-Copolymer-Ketten enthält, die unterschiedliche Copolymergehalte und ebenfalls unterschiedliche Kettenlängen aufweisen.

Darüberhinaus sind auch sogenannte Reaktorblends bekannt. Diese setzen sich aus APP, Polypropylen und Polymeren des Comonomers unterschiedlicher Kettenlänge sowie aus Propylen-Comonomeren-Ketten unterschiedlicher Kettenlänge und Comonomereinheiten zusammen. Ihre Herstellung erfolgt in einem oder mehreren Reaktionsschritten direkt im Polymerisationsreaktor.

Allen diesen Formmassen ist gemeinsam, daß die aus ihnen thermoplastisch hergestellten Formteile eine nur unbefriedigende Haftung für die unterschiedlichsten Beschichtungs massen aufweisen. So können entsprechende Formteile ohne vorhergehende Oberflächenbehandlung nicht mit befriedigendem Ergebnis lackiert, bedruckt, beschriftet oder kaschiert werden. Die arbeits- und kostenintensive Vorbehandlung, beispielsweise Coronarentladung, Beflammen, Plasmabehandlung, etc., verhindert oft aus wirtschaftlichen Gründen für zahlreiche Anwendungen die Verwendung von Polypropylen-Formmassen.

Es bestand somit die Aufgabe, eine Formmasse zu finden, die die bekannten nachteiligen Eigenschaften nicht aufweist.

Es wurde nun gefunden, daß Formteile, die aus Formmassen durch thermoplastische Umformung hergestellt wurden, welche Polypropylen oder Ethylen-Propylen-Copolymere und Polyvinylbutyral enthalten, gegenüber einer Polypropylen-Formmasse ohne PVB eine höhere Oberflächenspannung des Formteils aufweisen und sich daher ohne weitere Vorbehandlung der Oberfläche einwandfrei lackieren, bedrucken, beschriften und kaschieren lassen.

Die Erfindung betrifft somit eine Polypropylen-Formmasse, enthaltend 1 bis 99 Gew.-%, bezogen auf die Formmasse, eines isotaktischen Propylenpolymers, 0 bis 60 Gew.-%, bezogen auf die Formmasse, eines Kautschuks mit einer Glastemperatur unter - 20 °C, 0,01 bis 99 Gew.-%, bezogen auf die Formmasse, eines Polyvinylbutyrals und
0 bis 10 Gew.-%, bezogen auf die Formmasse, eines Phasenvermittlers.

Das zur Herstellung der erfindungsgemäßen Polypropylen-Formmasse zu verwendende Polypropylen ist entweder ein Homopolymer mit einem Schmelzindex MFI 230/5 von 1 bis 40 g/10 min oder ein Copolymer mit einem Schmelzindex von 5 bis 100 g/10 min.
Das Propylencopolymer besteht zu 99,5 bis 50, vorzugsweise 99 bis 70 Gew.-%, aus Propyleneinheiten mit einem Isotaxieindex von mindestens 85% und zu 0,5 bis 50, vorzugsweise 1 bis 30 Gew.-%, aus Einheiten von Ethylen und/oder aus Einheiten eines 1-Olefins mit mindestens 4 C-Atomen der Formel $R^1$-CH=CH-$R^2$, worin $R^1$ und $R^2$ gleich oder verschieden sind und ein Wasserstoffatom oder einen Alkylrest mit 1 bis 10, vorzugsweise 1 bis 6 C-Atomen bedeuten oder $R^1$ und $R^2$ mit den sie verbindenden Atomen einen Ring mit 4 bis 22 C-Atomen bilden. Bevorzugt sind Ethylen und Buten-1, 4-Methyl-1-penten, Hexen-1, Penten-1 und Norbornen. Besonders bevorzugt ist Ethylen. Das Comonomer ist statistisch mit hoher Regelmäßigkeit eingebaut.

Besteht das Polypropylenpoylmer aus einem Gemisch aus Propylenhomopolymer und Propylencopolymer, so besteht das Propylencopolymer zu 20 bis 90 Gew.-%, bevorzugt 40 bis 90 Gew.-%, aus Einheiten von Propylen und 80 bis 10 Gew.-%, bevorzugt 60 bis 10 Gew.-%, aus Einheiten von Ethylen und/oder mindestens einem 1-Olefn, wie es obenstehend definiert ist. Das Comonomer wird bevorzugt statistisch eingebaut. Der Anteil des Propylenhomopolymeren an der gesamten Polypropylen-Formmasse beträgt in diesem Fall 1 bis 99 Gew.-%, vorzugsweise 10 Gew.-%, der Anteil an Propylencopolymeren beträgt 80 bis 1 Gew.-%, bevorzugt 60 bis 5 Gew.-%.

Besonders bevorzugt setzt sich das erfindungsgemäß zu verwendende Propylenpolymer, wenn es aus zwei verschiedenen Polymerkomponenten besteht, aus 40 bis 95 Gew.-% Polypropylen (bezogen auf die Gesamtmenge Propylenpolymer) mit einem Isotaxieindex von mindestens 85% und 60 bis 5 Gew.-% Propyleneinheiten und 60 bis 10 Gew.-% Ethyleneinheiten (jeweils bezogen auf die Gesamtmenge Propylencopolymer), zusammen.

Das isotaktische Propylencopolymer ist in der erfindungsgemäßen Formmasse in einer Menge von 20 bis 99 Gew.-%, vorzugsweise 40 bis 95 Gew.-% enthalten.

0 bis 60, vorzugsweise 15 bis 45 Gew.-% der erfindungsgemäßen Formmasse ist ein Kautschuk mit einer Glastemperatur unter -20 °C. Geeignete Kautschuke sind bespielsweise Styrol-Butadien-Kautschuke, Silikonkautschuke, Ethylen-Propylen-Kautschuke (EPM) oder Ethylen-Propylen-Dien-Kautschuke(EPDM). EPM- und EPDM-Kautschuke können zusätzlich noch bis zu 40 % Polyethylen enthalten. Als Dien-Komponente kann 1,4-Hexadien, Norbornadien oder Cyclopentadien in einer Menge bis zu 10 Gew.-%, bezogen auf die Gesamtkautschukmenge, enthalten sein.

Der Gehalt an Ethylen und Propylen ist nicht begrenzt, solange eine Glastemperatur der amorphen Komponente von weniger als -20 °C erreicht wird.

Eine typische Zusammensetzung für handelsübliche EPM-Kautschuke ist beispielsweise 10 bis 60 Gew.-% Propyleneinheiten und 90 bis 40 Gew.-% Ethyleneinheiten. Von den Ethyleneinheiten entfallen dabei 0 bis 40 Gew.-% auf einen reinen Polyethylenanteil, der Rest bildet zusammen mit dem Propylen den Copolymeranteil.

Entsprechend zusammengesetzt sind EPDM-Kautschuke, im Copolymeranteil sind neben Propylen und Ethylen jedoch zusätzlich noch 1 bis 10 Gew.-% eines Diens vom oben erwähnten Typ eingebaut. Die Schmelzeviskosität typischer EPM- und EPDM-Kautschuke liegt im Bereich von 0,5 bis 300 g/10 min (MFI 230/5).

Die Mooney-Viskosität (gemessen bei 121 °C, ML) beträgt 20 bis 80. Die Streckspannnung bei 60 % Dehnung beträgt typisch 10 bis 300 psi (pounds/sq inch, 1 psi = 6894,8 kg/m.sec$^2$ = 1 Pa).

Vorteilhaft verwendbare Kautschuke sind beispielsweise unter den Handelsnamen Vistalon, Exxelor (Exxon Chemicals), Dutral (Dutral S.A.), Nordel (Du Pont) oder Buna (Veba) auf dem Markt.

0,01 bis 99 Gew.-%, vorzugsweise 1 - 30 Gew.-%, insbesondere bevorzugt 5 - 15 Gew.-% der erfindungsmäßigen Formmasse ist ein Polyvinylbutyral gemäß Formel I

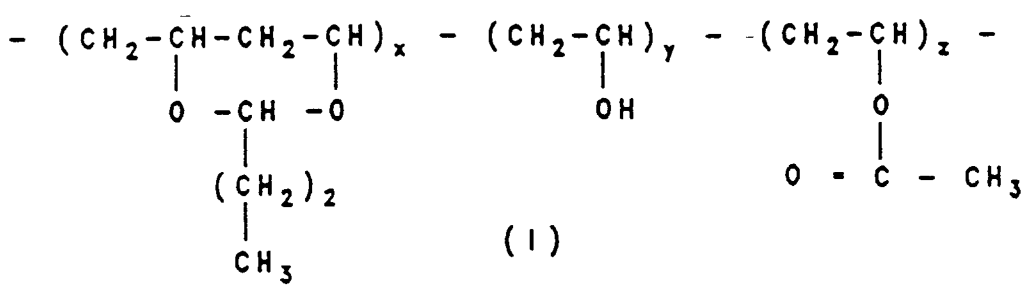

(I)

wobei das Gewichtsverhältnis der Einheiten $(...)_x : (...)_y : (...)_z$ im Bereich von 40 bis 90 % : 5 bis 50 % : < 10 % liegt. Bevorzugt ist jedoch Polyvinylbutyral mit Gewichtsverhältnissen von 60 bis 85 % $(...)_x$ : 10 bis 40 % $(...)_y$ : < 5 % $(...)_z$.

Polyvinylbutyral weist als 10 %ige Lösung in n-Butanol eine Viskosität, gemessen nach Höppler (DIN 53015), von bis zu 500 mPa.s auf, insbesondere wird Polyvinylbutyral bevorzugt, dessen Viskositätsbereich 10 bis 200 mPa.s beträgt.

0 bis 10 Gew.-% der erfindungsmäßigen Formmasse sind ein geeigneter Phasenvermittler. Geeignete Phasenvermittler sind bespielsweise mit Maleinsäureanhydrid gepfropfte Polypropylene. Vorteilhaft verwendbare Phasenvermittler sind beispielsweise unter den Handelsnamen ®Hostaprime und ®Hostamont (beide Hoechst AG) oder ®Jeffamine (Texaco Chem. Co.) auf dem Markt.

Außer dem isotaktischen Propylenpolymer, dem Kautschuk, dem Polyvinylbutyral und dem Phasenvermittler kann die erfindungsgemäße Formmasse noch die üblichen Zusatzstoffe enthalten, beispielsweise Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel, Fließhilfsmittel.

Die Herstellung der erfindungsgemäßen Formmasse kann nach den in der Kunststoffverarbeitung für das Mischen von Polymeren und Zusatzstoffen üblichen Methoden erfolgen.

Eine Möglichkeit ist der Einsatz eines Extruders mit Misch- und Knetorganen auf der Schnecke. Weiterhin sind auch Kneter, wie sie in der Gummi- und Kautschukindustrie eingesetzt werden, geeignete Mischmaschinen.

Die Mischtemperatur ist abhängig von der jeweiligen Zusammensetzung der Formmasse und läßt sich durch einfache Routineversuche ermitteln.

Die erfindungsgemäße Formmasse ergibt Formteile, die sich durch eine gute Lackierbarkeit (ohne die übliche Vorbehandlung) in Kombination mit hoher Härte und Schlagzähigkeit, insbesondere auch bei Temperaturen unter 0 °C, auszeichnen. Generell ist diese Formmasse überall dort zur Herstellung von extrudierten, gespritzten, geschäumten oder geblasenen Formkörpern verwendbar, wo hohe Steifigkeit, Härte, Reiß- und Biegefestigkeit, Maßhaltigkeit und Kratzfestigkeit in Kombination mit hoher Schlagzähigkeit, und gleichzeitig eine teilweise oder vollständige Lackierung, Beschriftung, Bedruckung oder Kaschierung erwünscht ist.

Im Automobilbau ist sie beispielsweise für teilweise oder vollständig lackierbare Front- und Heckstoßfänger, Außenspiegel, Kühlergrills, Seitenschutzleisten, Spoiler, Dichtungen, Kotflügelauskleidungen, LKW- und Traktorenkotflügel, kratzfeste KFZ-Innenausstattung oder Radkappen einsetzbar.

Ferner eignet sich die erfindungsgemäße Formmasse beispielsweise auch zur Herstellung von beschrift-, kaschier- oder bedruckbaren reißfesten Folien, Membranfiltern, Fasern und Filamenten.

Die folgenden Beispiele sollen die Erfindung näher erläutern.

MFI 230/2,16 = Schmelzindex bei 230 °C, 2,16 kg Belastung, nach DIN 53735

E-Modul = Zugmodul nach 150 R 527, gemessen am großen Normzugstab

(170 X 10 X 4 mm, Fließweglänge 80 mm)

Die Streckspannung und die Dehnung bei Streckspannung wurden bestimmt. Außerdem wurde die Durchstoßarbeit im elektronischen Durchstoßversuch nach ISO 6603/2 gemessen.

$a_{cN}$ = Charpy-Kerbschlagzähigkeit nach ISO 179, gemessen an gespritzten Izodstäben (80 X 10 X 4 mm) mit V-Kerbe
(Flankenwinkel 45°, Kerbtiefe 1,3 mm, Kerbradius 1 mm).

Die Oberflächenspannung der Oberfläche von Spritzgußplatten wurde mit Hilfe von kommerziell erwerblichen Testtinten (Fa. Arcopal) und nach der Methode des sitzenden Tropfens mit verschiedenen Flüssigkeiten bestimmt.

Die Platten wurden ohne weitere Vorbehandlung mit einem Primer auf Wasserbasis beschichtet, anschließend mit einem Decklack auf Wasserbasis lackiert.

Es wurde ein Gitterschnitt durchgeführt.

Für die Herstellung der Formmassen wurde ein Pulvertrockenmischer der Fa. Henschel und ein Doppelschneckenextruder ZSK 28 (Fa. Werner & Pfleiderer) verwendet.

Beispiel 1

Durch Extrusion wurde eine Formmasse hergestellt, bestehend aus 89 Gew.-% isotaktischem Polypropylen, bezogen auf die gesamte Formmasse, und 10 Gew.-% eines Polyvinylbutyrals enthaltend 84,8 Gew.-% Vinylacetaleinheiten (x), 12,3 Gew.-% Vinylalkoholeinheiten (y) und 2,9 Gew.-% Vinylacetateinheiten (z). Die Viskosität nach Höppler (DIN 53015) einer 10 %igen Lösung in n-Butanol betrug 125 mPa.s. Die DSC-Glastemperatur betrug 70 °C. Das verwendete isotaktische Polypropylen hatte einen MFI 230/2,16 von 5 g/10 min, einen Schmelzpunkt von 161 °C; weitere Daten waren $M_w$ = 300.000 g/mol, $M_w/M_n$ = 4,5, VZ = 230 $cm^3$/g.

4500 g des isotaktischen Polypropylenpulvers wurden mit 500 g des PVBs gemischt und die Mischung mit 5 g Pentaerithityl-tetrakis-[3-(3,5-di-t-butyl-4-hydroxyphenyl)propionat], 2,5 g Tris-(2,4-di-t-butylphenyl)-phosphit und 5 g Calciumstearat gegen chemischen Abbau unter Extrusionsbedingungen stabilisiert. In den fünf Heizzonen des Extruders wurden Temperaturten von 170 °C (Einzug), 190 °C, 210 °C, 230 °C und 230 °C (Düsenplatte) eingestellt. Die Extruderschnecke wurde mit 200 Upm betrieben, die Massetemperatur der Mischung im Extruder betrug 240 °C.

An der so hergestellten Formmasse wurden die folgenden Daten gemessen: MFI 230/2,16 = 5,74 g/10 min; VZ = 168 $cm^3$/g; $a_{cN}$ = 3,1 mJ/$mm^2$ (23 °C); Schmelzpunkt (DSC) = 161 °C, Glastemperatur Tg = 10 °C.

Die Oberflächenspannung von spritzgegossenen Formplatten betrug nun 33 mN/m statt 20 mN/m für das reine Polypropylen.

Beispiel 2

Beispiel 1 wurde wiederholt, jedoch wurden statt 4500 g isotaktischem Polypropylen nur 4450 g und zusätzlich 50 g des Phasenvermittlers, ein auf kurzkettiges Polypropylen gepfropftes Maleinsäureanhydrid eingesetzt.

An der so hergestellten Formmasse wurden die folgenden Daten gemessen: MFI 230/2,16 = 5,11 g/10 min; $a_{cN}$ = 3,1 mJ/mm$^2$ (23 °C); Schmelzpunkt (DSC) = 161 °C, Glastemperatur Tg = 10 °C.

Die Oberflächenspannung von spritzgegossenen Formplatten betrug 35 mN/m statt 20 mN/m für das reine Polypropylen.

Beispiel 3

Unter den gleichen Bedingungen wie in Beispiel 2 wurde statt des dort verwendeten Phasenvermittlers 50 g eines auf Polypropylen mittlerer Kettenlänge gepfropftes Maleinsäureanhydrid eingesetzt.

Die Prüfungsergebnisse sind in der Tabelle zusammengestellt.

Beispiele 4 bis 6

Es wurde analog zu den Beispielen 1 - 3 verfahren, statt des Propylenhomopolymeren wurde hier jedoch ein Propylenblockcopolymer verwendet. Dieses Propylenblockcopolymer hatte die folgende Zusammensetzung: 75 Gew.-% Propyleneinheiten und 25 Gew.-% Ethyleneinheiten; 30 Gew.-% der Kautschukphase war Polyethylen und 70 Gew.-% ein Ethylen-Propylen-Copolymer (EPM) bestehend aus 60 Gew.-% Propyleneinheiten und 40 Gew.-% Ethyleneinheiten. Der MFI 230/5 des Kautschuks betrug 2 g/10 min, die Viskositätszahl (VZ) 236 cm$^3$/g, der DSC-Schmelzpunkt 161 °C und die DSC-Glastemperatur -56 °C.

Beispiele 7 bis 9

Es wurde analog zu den Beispielen 4 bis 6 verfahren, statt des reinen Blockcopolymers wurden hier nur 90 Teile desselben und zusätzlich 10 Teile einer Kautschukzubereitung verwendet. Diese Kautschukzubereitung hatte die folgende Zusammensetzung: 35,8 Gew.-% Propyleneinheiten und 64,2 Gew.-% Ethyleneinheiten; 40,4 Gew.-% der Kautschukphase war Polyethylen und 59,6 Gew.-% ein Ethylen-Propylen-Copolymer (EPM) bestehend aus 60,0 Gew.-% Propyleneinheiten und 40,0 Gew.-% Ethyleneinheiten. Der MFI 230/5 der Kautschukzubereitung betrug 2 g/10 min, die Viskositätszahl (VZ) 236 cm$^3$/g, der DSC-Schmelzpunkt 131 °C und die DSC-Glastemperatur -56 °C.

Die Ergebnisse der Prüfung sind in der Tabelle zusammengestellt.

Beispiel 10

Unter den gleichen Bedingungen wie in Beispiel 2 wurden statt der dort verwendeten 1 % des Phasenvermittlers hier 5 Gew.-% eingesetzt.

Die Ergebnisse der Prüfung sind in der Tabelle zusammengestellt.

Beispiel 11

Unter den gleichen Bedingungen wie in Beispiel 5 wurde statt des dort verwendeten Polyvinylbutyrals ein anderer PVB - Typ mit folgender Zusammmensetzung verwendet: 71,9 Gew.-% Vinylacetaleinheiten (x), 25,3 Gew.-% Vinylalkoholeinheiten (y) und 2,8 Gew.-% Vinylacetateinheiten (z). Die Viskosität nach Höppler (DIN 53015) einer 10 %igen Lösung in n-Butanol betrug 125 mPa.s. Die DSC-Glastemperatur betrug 73 °C.

Die an einem aus dieser Formmasse hergestellten Formteil gemessene Oberflächenspannung betrug nun 39 mN/m statt 20 mN/m für das reine Propylenblockcopolymer.

Vergleichsbeispiel A

Zum Vergleich wurde das reine Propylenhomopolymer aus Beispiel 1 untersucht.

Vergleichsbeispiel B

Zum Vergleich wurde das reine Propylenblockcopolymer aus Beispiel 4 untersucht.

Die Ergebnisse sind in Tabelle 1 zusammengefaßt.

Im Phasenkontrast und in der Schmelze erkennt man die Güte der Dispergierung. Der Einfluß des Phasenvermittlers ist klar zu erkennen. Die Mischung des Propylenhomopolymers mit PVB ohne Phasenvermittler weist noch eine Teilchengröße von 10 µm auf, unter dem Einfluß des Phasenvermittlers ist die mittlere Teilchengröße auf immerhin 2 µm abgesunken. Dabei genügte hier eine Menge von 1 Gew.-% völlig. Die in Beispiel 10 versuchsweise zugegebene Menge von 5 % des Phasenvermittlers brachte keine weitere Verfeinerung der Morphologie.

**Tabelle: Eigenschaften der Formmasse**

| Bsp. | MFI 230/2.16 g/10 min | E-Mod [ MPa ] | Streck-spannung [ MPa ] | Streck-dehnung [ % ] | $a_{cN}$ mJ/mm² 23°C | 0°C | -20°C | -40°C | Durchstoßarbeit W [ J ] 0°C | - 20°C | - 40°C | OFS mN/m | Gitterschnitt Gt |
|---|---|---|---|---|---|---|---|---|---|---|---|---|---|
| 1 | 5.74 | - | - | - | 3.4 | - | - | - | - | - | - | 33 | - |
| 2 | 5.11 | - | - | - | 3.1 | - | - | - | - | - | - | 35 | - |
| 3 | 6.31 | - | - | - | 2.1 | - | - | - | - | - | - | 34 | - |
| 4 | 7.95 | 927 | 13.2 | 71 | 15.6 | 8.5 | 6.8 | 4.4 | 18.9 | 19.7 | 14.4 | 36 | - |
| 5 | 9.53 | - | - | - | 52.7 | - | - | - | - | - | - | 35 | - |
| 6 | 8.41 | - | - | - | 57.8 | - | - | - | - | - | - | 35 | - |
| 7 | 6.77 | 811 | 11.6 | 43 | 35.2 | 12.2 | 9.0 | 5.6 | 18.5 | 17.9 | 17.5 | 35 | - |
| 8 | 6.98 | - | - | - | 65.6 | - | - | - | - | - | - | 35 | - |
| 9 | 6.92 | - | - | - | 68.1 | - | - | - | - | - | - | 35 | - |
| 10 | 4.40 | - | - | - | 33.6 | - | - | - | - | - | - | 29 | - |
| 11 | 6.50 | 964 | 13.1 | 49 | - | - | - | - | - | - | - | 39 | 1 |
| A | 5.00 | 1350 | 31 | 10 | - | - | - | - | - | - | - | 29 | 5 |
| B | 6.50 | 694 | 12 | 84 | 50 | 10 | 8.5 | 5.5 | 23.7 | 25.4 | 24.6 | 29 | 5 |

## Patentansprüche

**1.** Polypropylen-Formmasse, enthaltend
1 bis 99 Gew.-%, bezogen auf die Formmasse, eines isotaktischen Propylenpolymers,
0 bis 60 Gew.-%, bezogen auf die Formmasse, eines Kautschuks mit einer Glastemperatur unter -20

°C,
0,01 bis 99 Gew.-%, bezogen auf die Formmasse, eines Polyvinylbutyrales und
0 bis 10 Gew.-%, bezogen auf die Formmasse, eines Phasenvermittlers.

**2.** Formmasse nach Anspruch 1, dadurch gekennzeichnet, daß das isotaktische Propylenpolymer ein Propylenhomopolymer mit einem Isotaxieindex von mindestens 85 % ist.

**3.** Formmasse nach Anspruch 1, dadurch gekennzeichnet, daß das isotaktische Propylenpolymer ein Propylencopolymer ist, welches zu 99,5 bis 50 Gew.-% aus Propyleneinheiten mit einem Isotaxieindex von mindestens 85% und zu 0,5 bis 50 Gew.-% aus Einheiten von Ethylen und/oder aus Einheiten eines 1-Olefins mit mindestens 4 C-Atomen der Formel $R^1$-CH=CH-$R^2$, worin $R^1$ und $R^2$ gleich oder verschieden sind und ein Wasserstoffatom oder einen Alkylrest mit 1 bis 10 C-Atomen bedeuten oder $R^1$ und $R^2$ mit den sie verbindenden Atomen einen Ring mit 4 bis 22 C-Atomen bilden , besteht.

**4.** Formmasse nach Anspruch 3, dadurch gekennzeichnet, daß das Propylencopolymer ein Ethylen/Propylen-Copolymer ist.

**5.** Formmasse nach Anspruch 1, dadurch gekennzeichnet, daß das isotaktische Propylenpolymer ein Gemisch ist aus
a) 20 bis 99 Gew.-% eines Propylenhomopolymers mit einem Isotaxieindex von mindestens 85% und
b) 80 bis 1 Gew.-% eines Propylencopolymers, welches zu 20 bis 90 Gew.-% aus Propyleneinheiten mit einem Isotaxieindex von mindestens 85% und zu 80 bis 10 Gew.-% aus Einheiten von Ethylen und/oder aus Einheiten eines 1-Olefins mit mindestens 4 C-Atomen der Formel $R^1$-CH=CH-$R^2$, worin $R^1$ und $R^2$ gleich oder verschieden sind und ein Wasserstoffatom oder einen Alkylrest mit 1 bis 10 C-Atomen bedeuten oder $R^1$ und $R^2$ mit den sie verbindenden Atomen einen Ring mit 4 bis 22 C-Atomen bilden, besteht.

**6.** Formmasse nach Anspruch 1, dadurch gekennzeichnet, daß sie Polyvinylbutyral der Formel I

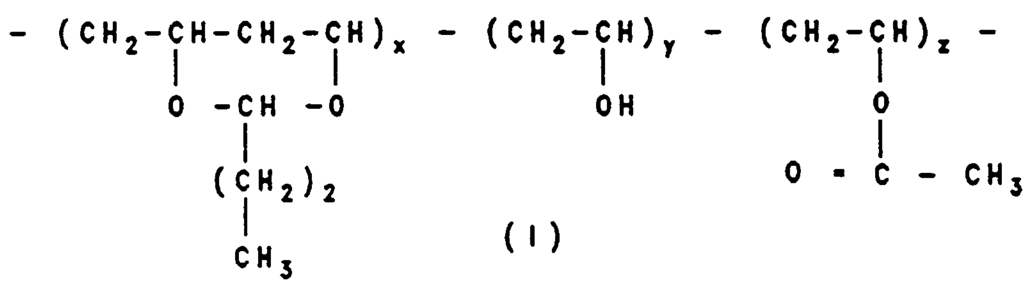

(I)

enthält, wobei das Gewichtsverhältnis der Einheiten $(...)_x$ : $(...)_y$ : $(...)_z$ im Bereich von 0 bis 90 % : 5 bis 50 % : < 10 % liegt.

**7.** Formmasse nach Anspruch 1, dadurch gekennzeichnet, daß der Phasenvermittler ein mit Maleinsäureanhydrid gepfropftes Polypropylen ist.

**8.** Formmasse nach Anspruch 1, dadurch gekennzeichnet, daß sie zusätzlich Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel oder Fließhilfsmittel enthält.

**9.** Verwendung der Formmasse nach Anspruch 1 zur Herstellung von Formkörpern.

**10.** Formkörper, herstellbar aus der Formmasse nach Anspruch 1.

Europäisches Patentamt

# EUROPÄISCHER RECHERCHENBERICHT

Nummer der Anmeldung
EP 94 11 3882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 471 079 (JAPAN/NIPPON PETROCHEMICALS)<br>* Seite 3, Zeile 10 - Zeile 32 *<br>--- | 1-10 | C08L23/10<br>C08L29/14 |
| A | WO-A-93 02141 (DUPONT)<br>* Seite 1, Zeile 20 - Zeile 31 *<br>* Seite 3, Zeile 5 - Zeile 24 *<br>--- | 1-10 | |
| A | EP-A-0 167 455 (KAWASAKI STEEL)<br>* Seite 6, Zeile 13 - Seite 7, Zeile 35 *<br>----- | 1-10 | |

RECHERCHIERTE SACHGEBIETE (Int.Cl.6)

C08L

Der vorliegende Recherchenbericht wurde für alle Patentansprüche erstellt

| Recherchenort | Abschlußdatum der Recherche | Prüfer |
|---|---|---|
| DEN HAAG | 2. Januar 1995 | Schmidt, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)